# EUROPEAN PATENT SPECIFICATION

(11) **EP 1 967 405 B1**
(45) Date of publication and mention of the grant of the patent: **22.12.2010**
(21) Application number: 07103808.7
(22) Date of filing: 08.03.2007
(51) Int. Cl.: B60K 17/35

(54) **A final drive assembly for a vehicule**
Endantrieb für ein Fahrzeug
Ensemble de transmission final pour véhicule

(43) Date of publication of application: 10.09.2008
(73) Proprietor: Countytrac Limited, Ashford, Kent TN23 1EW (GB); Ford Global Technologies, LLC, Dearborn, MI 48126 (US)
(72) Inventor: May, Eric, Ashford, Kent TN23 1EW (GB)
(74) Representative: Grunfeld, David Peter

(56) References cited:
- DE-A1- 4 444 027
- US-A1- 2005 266 952
- US-B1- 6 394 246

## Description

This invention relates to a final drive assembly comprising hydraulically operable couplings and is suitable for use in vehicle transmission assemblies for four wheel drive vehicles.

Four wheel drive vehicles normally operate in two wheel drive (2WD) and have part time alternative drive wheels that are controlled to operate when four wheel drive (4WD) is necessary.

One conventional method of operation is a manual shift operated by the vehicle driver between 2WD and 4WD and this is normally achieved by means of a second gear stick located in the vehicle drive compartment.

Another method of operation is for the vehicle to be provided with electronic and hydraulic sensors and controls which automatically split the torque output from the engine so as to supply torque to the driven wheels based on interrogation of the sensors by the control system.

In WO 03/095256 the present applicant describes a vehicle transmission system in which a normally 2WD drive train also drives the alternative wheels under particular conditions. The control is purely mechanical having a hydraulically operable clutch of the type described in US-A-5310388.

The clutch described in US-A-5310388 is a multi-plate friction clutch located in a housing containing transmission fluid and the clutch plates are clamped together by a hydraulic piston which is actuated by hydraulic pressure generated by pumped transmission fluid.

The volume of pumped fluid and hence the clamping pressure on the clutch plates is related to the rotational speed difference between the housing and the output shaft. Typically a friction clutch is provided in the drive train to each of the front wheels. Under some conditions, for example, when there is a rotational speed difference between the front wheels, or there are physical differences between the mechanical components of the oil pump, piston and clutch, it is possible for there to be a higher pump pressure acting within the hydraulic coupling on one side of the vehicle than the other. This can cause one clutch to engage before, or more than, the other clutch and result in a torque steer effect.

Dokument DE 4444027 discloses a vehicle final drive assembly according to the preamble of claim 1.

The present invention provides an improved vehicle final drive assembly which ameliorates the above problems.

According to the present invention there is provided a vehicle final drive assembly as defined in claim 1.

Preferably one of said casings having a ring gear thereon acts as the rotary input and may be caused to rotate by means of an input shaft, or gear, having a pinion thereon which engages a ring gear on said one casing, the two casings being interconnected by a cross shaft.

The final drive assembly may include a housing in which the shafts and casings are mounted, the housing containing the hydraulic fluid which is used to operate the couplings. Each pump outlet is formed in its respective casing cover and in turn is connected through a rotary hydraulic fluid connection to respective passageways formed in the housing.

The respective passageways formed in the housing may be interconnected by an external conduit.

The clutches preferably each comprise a plurality of coaxial clutch plates having alternating plates rotationally fast with the casing and respective output shaft.

The friction plates are biased together by a hydraulic actuator which is actuated by hydraulic pressure generated by the pump, preferably a gear pump having its impeller fixed to the output shaft and an eccentric ring fixed to the casing.

A similar hydraulically operable coupling is disclosed in US 5310 388 which discloses details of operation of the hydraulic controls for operation of the multi-plate clutch.

Each coupling may further comprise a valve controlling fluid flow through the actuator, and such control means are described in EP-A-1956260.

According to another aspect of the invention there is provided a transmission assembly for a motor vehicle comprising a change speed transmission having an input shaft connectable to a vehicle engine and a transmission main output shaft connected to a primary drive axle, and a final drive assembly according to the first of the invention connected to a secondary drive axle.

The secondary drive axle may be connected to the front wheels of the vehicle and the final drive assembly is arranged with the two hydraulically operated couplings being spaced apart and located one on each side of the transmission assembly, preferably either side of the bell housing. The conduit connecting the couplings passes across the transmission assembly.

The invention will be described by way of example and with reference to the accompanying drawings in which:
- Fig.1: is schematic view of a motor vehicle having a final drive assembly and transmission assembly having a coupling according to the present invention,
- Fig.2: a schematic of the final drive assembly according to the present invention,
- Fig.3: is an isometric view of a final drive assembly,
- Fig.4: is a sectional view of the final drive assembly of Fig. 3,
- Fig.5: is an enlarged section of a coupling showing the oil pump and passageways to the equalisation conduit, and
- Fig. 6: is a front elevation of the final drive assembly showing the external equalisation conduit connecting the two couplings.

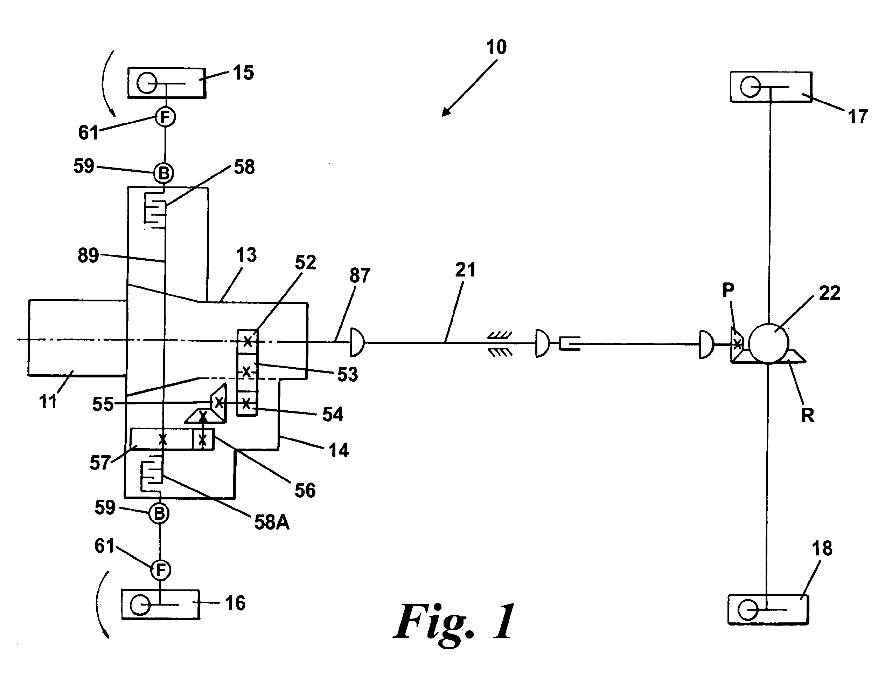

With reference to Fig.1, there is shown a motor vehicle 10 having an engine 11 arranged longitudinally of the vehicle. A transmission assembly 13 is mounted on the rear of the engine and has a primary drive to the rear wheels 17 & 18 and includes a further final drive assembly 14 which drives the front wheels 15 and 16. The rear wheels 17 & 18 are driven by the transmission main shaft 51 via a conventional drive shaft 21 and differential unit 22 having the typical ring gear R and pinion P.

A secondary drive for the front wheel 15 & 16 may be taken off the main transmission shaft 51 as is described in detail in the applicants co-pending application GB-A-0606191.6 and shown in Fig.1. The drive is taken off the shaft 51 via gears 52, 53, 54. The gear 54 drives a bevel gear 55 which is connected to a ring gear 57, via a gear spindle 56 having a bevel gear that meshes with the bevel 55 and a pinion that meshes with the ring gear 57. The ring gear 57 is connected in parallel to a pair of hydraulically operated couplings 58 which are in turn connected to respective wheels 15 or 16 through constant velocity joints 59 & 61.

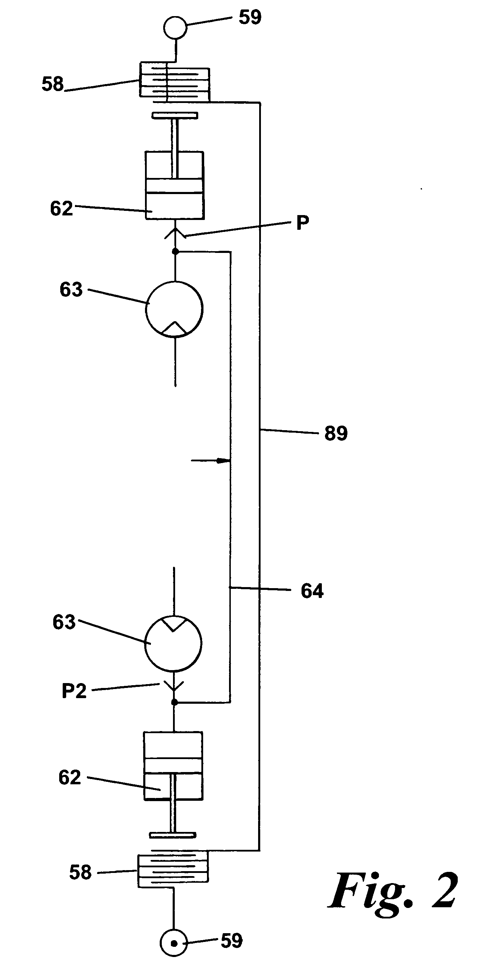

With reference to Fig.2, the pair of rotary couplings 58 rotatably connect the wheels 15, 16 to the rotary input 57, i.e the ring gear 57 through hydraulically operable clutch means actuated by a respective hydraulic actuator 62. The hydraulic actuators 62 each have hydraulic fluid delivered thereto by a respective pump 63. The pumps 63 are operated by a speed differential between the ring gear 57 and the wheels 15, 16. A conduit 64 interconnects the pressurised hydraulic fluid outputs P1, P2 from the two pumps 63 in order to equalize the hydraulic pressures of the two pump outputs.

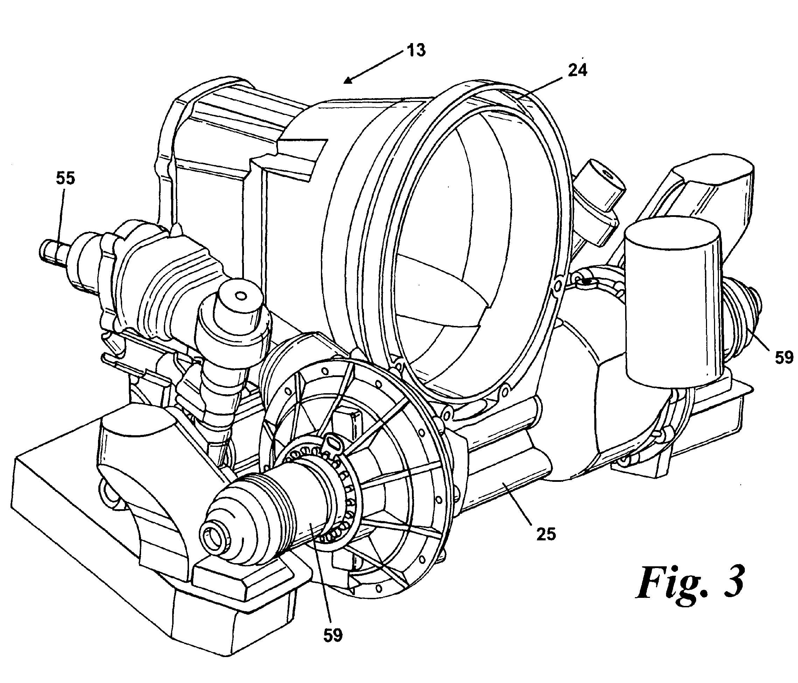

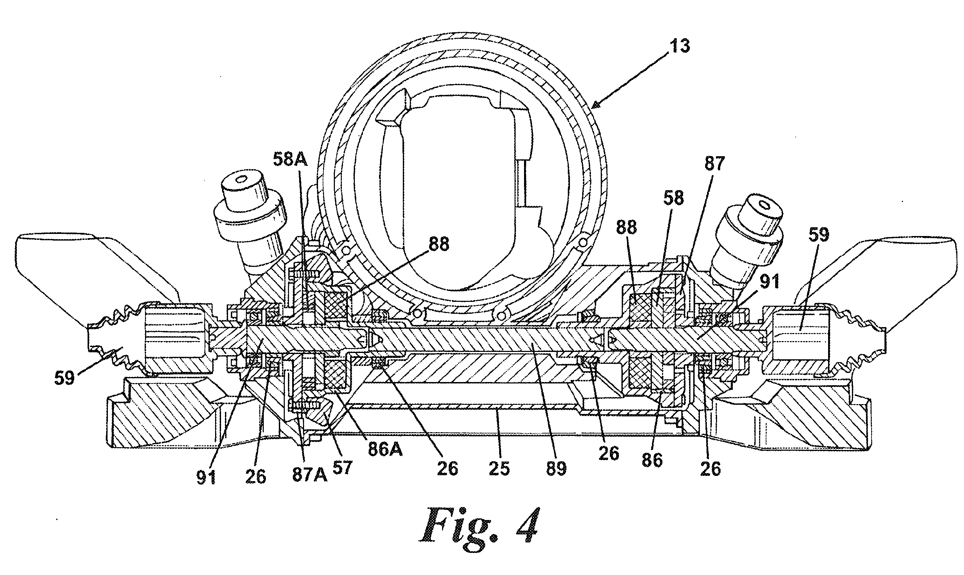

With reference to Figures 3 & 4, the transmission assembly 13 is described in detail in WO 03/095256, the contents of which are hereby incorporated into the present description and will be described only in such detail as is necessary for an understanding of the present invention. The assembly 13 houses a plurality of change speed gears, as is well known, having a power input shaft which in use engages a drive coupling (not shown), typically a friction clutch, mounted on the rear of the engine 11 and enclosed in bell housing 24. The change speed gears drive the transmission main drive shaft 51 extending rearwardly from the transmission assembly 13.

The secondary drive to the front wheels 15 & 16 is substantially located in a final drive housing 25 which in turn is mounted to the transmission assembly 13. The final drive assembly 14 and the housing 25 are arranged so as to have a particular shape and configuration within the vehicle engine compartment so as to avoid other components mounted on the engine or within the engine compartment.

The main drive shaft 51 connects with the secondary drive rotary input (ring gear 57) as previously described in Fig.1 or alternatively as is shown in Fig.3 and described in WO 03/095256. In Fig. 3, the lower portion of an input shaft 55 has a pinion gear thereon which is drivably connected to a ring gear 57 of one of the hydraulically operated couplings 58. The two couplings 58 are mounted in the final drive housing 25 which extends across the front lower portion of the transmission assembly 13 and bell housing 24. The housing 25 is suitably sealed and contains hydraulic fluid for operation of the hydraulically operated couplings 58.

The two couplings 58 are mounted for coaxial rotation in the housing 25 on bearings 26. Each coupling 58 has a casing 86 of hollow construction and one coupling 58A is provided with the bevel gear ring 57 extending around its outer surface which meshes with the rotary input. Rotation of the rotary input 57 causes the casing 86A of coupling 58A to rotate. The casing 86A of coupling 58A is connected to a similar casing 86 of the second hydraulically operated coupling 58 by a coaxial cross-shaft 89 so that the ring gear 57 drives both couplings 58 in parallel. The two couplings 58 drive respective coaxial half shafts 91 which are in turn connected to the wheels 15 and 16 through constant velocity joints 59, 61.

The hydraulically operated couplings 58 are of similar construction and therefore only coupling 58A will be described in detail, the other coupling 58 operating in a similar manner. The casing 86A has a cover 87A enclosing a multi-plate friction clutch 88 operable in hydraulic fluid. The multi-plate clutch 88, as is well known, comprises a stack of annular friction plates 85 having alternate plates rotationally fast with the casing 86, or clutch hub 89, through their outer and inner peripheries respectively. The hub 89 is rotationally fast with the half shaft 91.

The casing 86 becomes rotationally fast with the half shaft 91 when the clutch 88 is compressed by a hydraulic actuator 62. The hydraulic actuator 62 is actuated by hydraulic pressure generated by the oil pump 63. The oil pump 63 is bi-directional and comprises a stator mounted in the cover 87 for eccentric rotation relative to a multi-lobed rotor mounted on the half shaft 91. Hydraulic fluid in the housing 25 enters the pump 63 via apertures (not shown) in the casing cover 90. Fluid exits the casing 86 to drain in the housing 25 via drain ports (not shown).

The hydraulic pressure generated by the pump 63 operates the actuator 62, comprising an annular cylinder 65 and a annular piston 71 reciprocable within the cylinder 65, to cause engagement of the clutch when there is relative rotational movement between the half shaft 91 and the casing 86. A more detailed explanation of the operation of the couplings is given in US 5310 388.

When a vehicle is driving normally along a highway, the primary drive is through the differential 22 and back axle. Since the front wheel half shafts 91 are rotating at the same speed as the casings 86 there is essentially no drive through the front wheels 15 & 16. If in a particular situation, for example there is a rotational speed differential between the front wheels, the hydraulic pressure acting in one clutch will be higher than the hydraulic pressure acting in the other clutch. This may give rise to "torque steer" due to said one clutch engaging before, or with more clamping load than the other clutch.

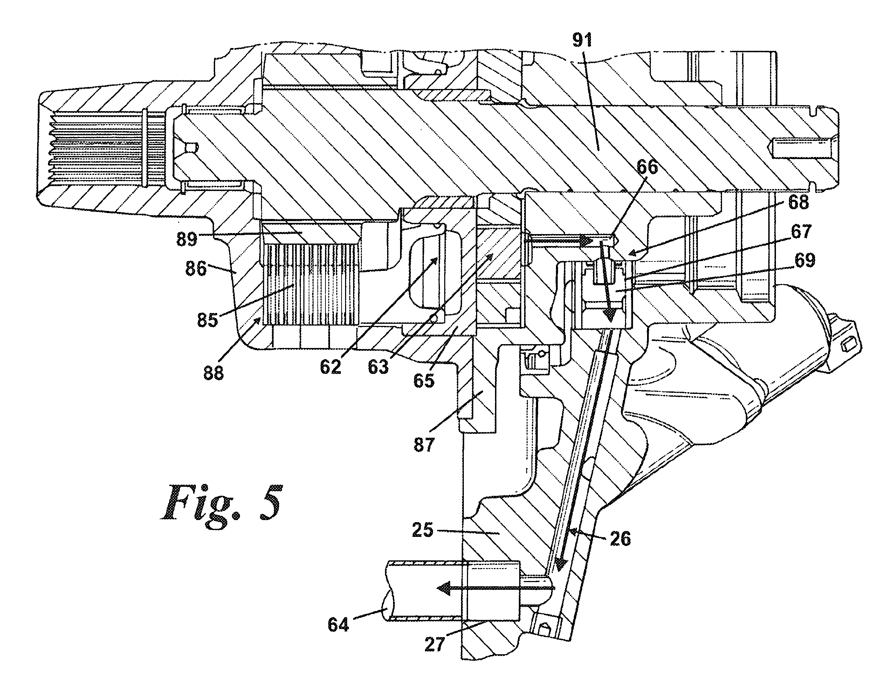

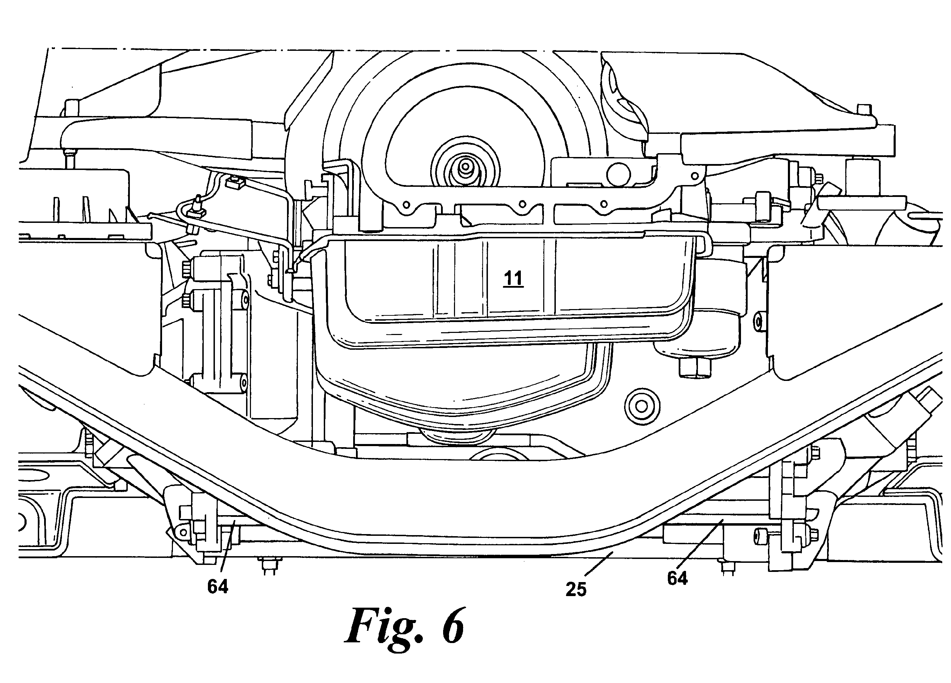

Referring to Figs. 5 & 6, in order to prevent operation of a clutch 88 in such circumstances, the two pumps 63 are interconnected to that the different pressures are equalised. Each pump 63 is provided with a pump outlet 66 in the respective casing cover 87. The outlet 66 is connected to a rotary fluid connection 67 located on the housing 25. The connection 67 includes two spaced apart high pressure annular oil seals 68 mounted on an annular carrier 69. The outlet 66 connects into the space between the seals 68 and flows through radial passageways (not shown) in carrier 69 to connect with a passageway 26 in its respective portion of the housing 25. A connecting port 27 opens into the passageway 26. The two connecting ports 27 and the respective passageways 26 formed in the housing 25 are interconnected by the external conduit 64. When there is higher hydraulic pressure in one coupling, the conduit 64 allows for the transfer of hydraulic fluid from the higher pressure coupling to the lower pressure coupling. This equalises the pressure in both couplings and substantially eliminates any "torque steer" effect.

## Claims

1. A vehicle final drive assembly (14) operable between a pair of wheels (15, 16) across an axle and comprising a pair of rotary couplings (58) which are connected in parallel to a rotary input (57), each coupling (58) having an output shaft (91) for driving a respective wheel (15 or 16) and which is rotatably connected to said rotary input (57) through a hydraulically operable clutch (88) which is actuated by hydraulic pressure, each clutch (88) being located within a hollow casing (86, 87) and operated by a hydraulic actuator (62) which receives hydraulic fluid from a respective pump (63) operated by a speed differential between said rotary input (57) and the respective output shaft (91), furthermore outlets (66) from the two pumps (63) are interconnected in order to equalize the hydraulic pressures (P1, P2) of the two pumps and equalise the hydraulic pressures (P1, P2) in the two couplings (58), **characterised in that** the two rotary couplings are spaced apart, each having a respective casing (86, 87),

2. A final drive assembly as claimed in Claim 1, **characterised in that** one of said casings (86A) having a ring gear (57) thereon acts as the rotary input, the two casings (86, 87) being interconnected by a cross shaft (89).

3. A final drive assembly as claimed in Claim 1 or Claim 2, **characterised in that** the final drive assembly (14) further includes a housing (25) in which the shafts (89, 91) and casings (86, 87) are mounted, the housing (25) containing the hydraulic fluid which is used to operate the couplings (58).

4. A final drive assembly as claimed in Claim 3, **characterised in that** each pump outlet (66) is formed in its respective casing cover (87) and is connected through a rotary fluid connection (67) to respective passageways (26) formed in the housing (25).

5. A final drive assembly as claimed in Claim 4, **characterised in that** the respective passageways (26) formed in the housing (25) are interconnected by an external conduit (64).

6. A final drive assembly as claimed in any one of Claims 1 to 5, **characterised in that** the clutches (88) each comprise a plurality of coaxial clutch plates (85) having alternating clutch plates rotationally fast with the casing (86) and respective output shaft (91).

7. A transmission assembly for a motor vehicle comprising a change speed transmission (13) connectable to a vehicle engine (11) and having a transmission main output shaft (51) connected to a primary drive axle, and a final drive assembly according to any one of Claims 1 to 6 connected to a secondary drive axle.

8. A transmission assembly as claimed in Claim 7, **characterised in that** the secondary drive axle is connected to the front wheels (15, 16) of the vehicle, and the final drive assembly is arranged with the two hydraulically operated couplings (58) being spaced apart and located one on each side of the transmission assembly (13).

9. A transmission assembly as claimed in Claim 8 when dependant upon Claim 5, wherein the conduit (64) passes from one side of the transmission assembly to the other.

## Patentansprüche

1. Fahrzeugendantrieb (14), der zwischen einem Paar Räder (15, 16) über eine Achse betrieben werden kann und ein Paar Drehkupplungen (58) umfasst, die parallel zu einem Drehantrieb (57) verbunden sind, wobei jede Kupplung (58) eine Ausgangswelle (91) hat, um ein jeweiliges Rad (15 oder 16) anzutreiben, und drehbar mit dem Drehantrieb (57) durch eine hydraulisch gesteuerte Kupplung (88) verbunden ist, die durch Hydraulikdruck betätigt wird, wobei sich jede Kupplung (88) innerhalb eines hohlen Gehäuses (86, 87) befindet und durch einen Hydraulikbetätiger (62) gesteuert wird, der Hydraulikfluid von einer jeweiligen Pumpe (63) erhält, die durch eine Drehzahldifferenz zwischen dem Drehantrieb (57) und der jeweiligen Ausgangswelle (91) betrieben wird, wobei weiterhin Auslässe (66) von den zwei Pumpen (63) miteinander verbunden sind, um die Hydraulikdrücke (P1, P2) der zwei Pumpen sowie die Hydraulikdrücke (P1, P2) in den zwei Kupplungen (58) auszugleichen, **dadurch gekennzeichnet, dass** die zwei Drehkupplungen voneinander beabstandet und in einem jeweiligen Gehäuse (86, 87) untergebracht sind.

2. Endantrieb nach Anspruch 1, **dadurch gekennzeichnet, dass** eines der Gehäuse (86A) mit einem daran vorgesehenen Zahnkranz (57) als der Drehantrieb dient, wobei die zwei Gehäuse (86, 87) durch eine Querwelle (89) miteinander verbunden sind.

3. Endantrieb nach Anspruch 1 oder Anspruch 2, **dadurch gekennzeichnet, dass** der Endantrieb (14) weiterhin ein Gehäuse (25) beinhaltet, in dem die Wellen (89, 91) und die Gehäuse (86, 87) montiert sind, wobei das Gehäuse (25) das Hydraulikfluid enthält, mit dem die Kupplungen (58) betrieben werden.

4. Endantrieb nach Anspruch 3, **dadurch gekennzeichnet, dass** jeder Pumpenauslass (66) in seiner jeweiligen Gehäuseabdeckung (87) ausgebildet und durch eine Drehfluidverbindung (67) mit jeweiligen Durchgängen (26) verbunden ist, die im Gehäuse (25) ausgebildet sind.

5. Endantrieb nach Anspruch 4, **dadurch gekennzeichnet, dass** die im Gehäuse (25) ausgebildeten jeweiligen Durchgänge (26) durch eine externe Leitung (64) miteinander verbunden sind.

6. Endantrieb nach einem der Ansprüche 1 bis 5, **dadurch gekennzeichnet, dass** die Kupplungen (88) jeweils mehrere koaxiale Kupplungsscheiben (85) umfassen, wobei abwechselnde Kupplungsscheiben drehfest mit dem Gehäuse (86) und der jeweiligen Ausgangswelle (91) vorgesehen sind.

7. Getriebe für ein Kraftfahrzeug, das ein Wechselgetriebe (13) umfasst, das mit einem Fahrzeugmotor (11) verbunden werden kann und eine Getriebehauptabtriebswelle (51) hat, die mit einer Primärantriebsachse verbunden ist, sowie ein Endantrieb nach einem der Ansprüche 1 bis 6, der mit einer Sekundärantriebsachse verbunden ist.

8. Getriebe nach Anspruch 7, **dadurch gekennzeichnet, dass** die Sekundärantriebsachse mit den Vorderrädern (15, 16) des Fahrzeugs verbunden und der Endantrieb so angeordnet ist, dass die zwei hydraulisch betätigten Kupplungen (58) voneinander beabstandet sind und sich jeweils eine davon auf jeder Seite des Getriebes (13) befindet.

9. Getriebe nach Anspruch 8, soweit von Anspruch 5 abhängig, wobei die Leitung (64) von einer Seite des Getriebes zur anderen Seite verläuft.

## Revendications

1. Ensemble de transmission finale pour véhicule (14) pouvant être utilisé entre une paire de roues (15, 16) à travers un essieu et comprenant une paire d'accouplements rotatifs (58) qui sont reliés en parallèle à une entrée rotative (57), chaque accouplement (58) comprenant un arbre de sortie (91) qui entraîne une roue respective (15 ou 16) et qui est relié de manière rotative à ladite entrée rotative (57) par l'intermédiaire d'un embrayage à commande hydraulique (88) qui est actionné par une pression hydraulique, chaque embrayage (88) étant logé dans un boîtier creux (86, 87) et commandé par un actionneur hydraulique (62) qui reçoit le fluide hydraulique provenant d'une pompe respective (63) commandée par un différentiel de vitesse monté entre ladite entrée rotative (57) et l'arbre de sortie respectif (91), en outre les sorties (66) des deux pompes (63) sont interconnectées afin d'égaliser les pressions hydrauliques (P1, P2) des deux pompes et d'égaliser les pressions hydrauliques (P1, P2) dans les deux accouplements (58), **caractérisé en ce que** les deux accouplements rotatifs sont espacés l'un de l'autre, chacun étant dans son boîtier respectif (86, 87).

2. Ensemble de transmission finale selon la revendication 1, **caractérisé en ce qu'**un desdits boîtiers (86A) sur lequel est monté une couronne (57) agit en tant qu'entrée rotative, les deux boîtiers (86, 87) étant interconnectés par un arbre transversal (89).

3. Ensemble de transmission finale selon la revendication 1 ou la revendication 2, **caractérisé en ce que** l'ensemble de transmission finale (14) comprend en outre un carter (25) dans lequel sont montés les arbres (89, 91) et les boîtiers (86, 87), le carter (25) contenant le fluide hydraulique qui est utilisé pour commander les accouplements (58).

4. Ensemble de transmission finale selon la revendication 3, **caractérisé en ce que** la sortie de chaque pompe (66) est ménagée dans le couvercle de son boîtier respectif (87) et est raccordée par l'intermédiaire d'un raccord rotatif de fluide (67) aux passages respectifs (26) ménagés dans le carter (25).

5. Ensemble de transmission finale selon la revendication 4, **caractérisé en ce que** les passages respectifs (26) ménagés dans le carter (25) sont interconnectés par un conduit extérieur (64).

6. Ensemble de transmission finale selon l'une quelconque des revendications 1 à 5, **caractérisé en ce que** les embrayages (88) comprennent chacun une pluralité de disques coaxiaux d'embrayage (85) comprenant en alternance des disques d'embrayage qui sont solidaires en rotation avec le boîtier (86) et l'arbre de sortie respectif (91).

7. Ensemble de transmission pour véhicule à moteur comprenant une transmission à changement de vitesses (13) pouvant être raccordée au moteur d'un véhicule (11) et comprenant un arbre de sortie principal de transmission (51) relié à un arbre d'entraînement primaire et un ensemble de transmission finale selon l'une quelconque des revendications 1 à 6 relié à un arbre d'entraînement secondaire.

8. Ensemble de transmission selon la revendication 7, **caractérisé en ce que** l'arbre d'entraînement secondaire est relié aux roues avant (15, 16) du véhicule et que l'ensemble de transmission finale est agencé avec les deux accouplements à commande hydraulique (58) espacés l'un de l'autre et situés de part et d'autre de l'ensemble de transmission (13).

9. Ensemble de transmission selon la revendication 8, quand celle-ci est dépendante de la revendication 5, dans ledit ensemble le conduit (64) va d'un côté de l'ensemble de transmission à l'autre côté de l'ensemble de transmission.
